# NEW EUROPEAN PATENT SPECIFICATION

(11) **EP 0 111 521 B2**
(45) Date of publication and mention of the opposition decision: **10.05.1995**
(45) Mention of the grant of the patent: 30.08.1989
(21) Application number: 83901876.9
(22) Date of filing: 02.05.1983
(51) Int. Cl.: H04N 5/18, H04N 5/235

(54) **VIDEO DRIVER CIRCUIT AND METHOD FOR AUTOMATIC GRAY SCALE ADJUSTMENT AND ELIMINATION OF CONTRAST TRACKING ERRORS**
VIDEOSTEUERSCHALTUNG UND VERFAHREN ZUR AUTOMATISCHEN GRAUWERTREGELUNG UND BESEITIGUNG VON KONTRASTGLEICHLAUFFEHLERN
CIRCUIT DE COMMANDE VIDEO ET PROCEDE DE REGLAGE AUTOMATIQUE DE L'ECHELLE DES GRIS ET ELIMINATION DES ERREURS DE SUIVIS DE CONTRASTE

(30) Priority: 14.06.1982 US 388281
(43) Date of publication of application: 27.06.1984
(73) Proprietor: MOTOROLA, INC., Schaumburg, IL 60196 (US)
(72) Inventor: NEWTON, Anthony D., CH-1202 Geneva (CH); PERKINS, Geoffrey W., Chandler, AZ 85224 (US)
(74) Representative: Ibbotson, Harold
(86) International application number: US8300644
(87) International publication number: WO8400091

(56) References cited:
- GB-A- 1 417 231
- US-A- 3 804 981
- US-A- 3 953 883
- US-A- 4 012 775
- US-A- 4 053 927
- US-A- 4 204 229
- US-A- 4 206 480
- US-A- 4 298 886
- US-A- 4 340 904
- Van Nostrand's Scientific Encyclopaedia, 5th edition, page 662
- Enzyklopädie Naturwissenschaft und Technik, pages 3618-3620

## Description

### Background of the Invention

In general, the present invention relates to video driver circuits and methods for use with a video display. More particularly, the invention relates to such circuits and methods having associated brightness and contrast controls of particular utility in the color video displays of television and data display units.

In color video display systems such as television receivers and data display units it is necessary to have several signal paths with associated gain controls which must track together. With poor gain tracking between signal paths, an undesirable color error will occur. For example, the gain controls must track such that red, green and blue signals of equal amplitudes give white for all contrast control settings. Moreover, the contrast control of the color difference signals (R-Y and B-Y) must also track accurately.

Previously, in bipolar integrated circuits, gain controls were usually independent current steering devices for each video signal path whose only advantage are their simplicity and small size. However, these individual current steering gain controls have major drawbacks in that V_{eb} matching errors of only five millivolts can give an error of twenty percent in the collector current ratio. Moreover, the gain control law has a limited linear range.

In the past, it has been generally necessary to provide separate drive controls for each of the three signal paths in a color video display. Further, inasmuch as the respective guns of a CRT picture tube age differently, it has been necessary to adjust the drive controls of the CRT throughout its life, particularly during the first twenty-four hours. In this respect, it has been necessary to "burn-in" the set to stabilize operation of the guns such that a final manual adjustment could be made of the respective gain controls.

In this regard, several integrated circuits for television receivers have introduced automatic setting of the CRT operating point, or its dc (black) reference level. From US-A-4 012 775 there is known a video display apparatus which compensates for variations in the characteristics of the display's CRT. Automatic adjustment occurs using two reference levels and feedback loops : a black level producing a dc adjustment ; and a white level producing a gain adjustment.

In US-A-4,204,229 there is disclosed an arrangement which enables a contrast range to be defined for the video signal between two adjustable potential levels and thus an increase in contrast to be obtained when the signal intended for an image display varies within a more restricted range.

However, since the brightness control of a television or video display receiver is usually accomplished by shifting the bias or dc reference level of the video display, this operation has the effect of changing both the average luminance of the display as well as the contrast ratio of the picture. In like manner, the contrast control is normally an amplitude control, the operation of which will also affect average luminance as well as the contrast ratio. In a colour television or data display system, saturation and hue may also be affected. Previously, there has been no provision for compensating the brightness control signal such that the picture black level remains unaffected by the contrast control signal.

It is therefore an object of the present invention to provide an improved video driver circuit and method for automatic gray scale adjustment and elimination of contrast tracking errors which preferably provides for accurate tracking of gain between red, green and blue video signal paths in a video display and which may provide the accurate tracking of colour difference signals (A-Y and B-Y) in a video display.

It is further desirable to obviate the burn-in requirement of a CRT saving setup time and power, to allow for the elimination of separate drive controls for the separate video signal paths in a colour video display and to provide for the modulation of the brightness control signal by the contrast control signal such that picture black level does not change with contrast.

### Summary of the Invention

The above-mentioned and other objects and advantages of the present invention are provided by a video driver circuit as claimed in claim 1.

### Brief Description of the Drawings

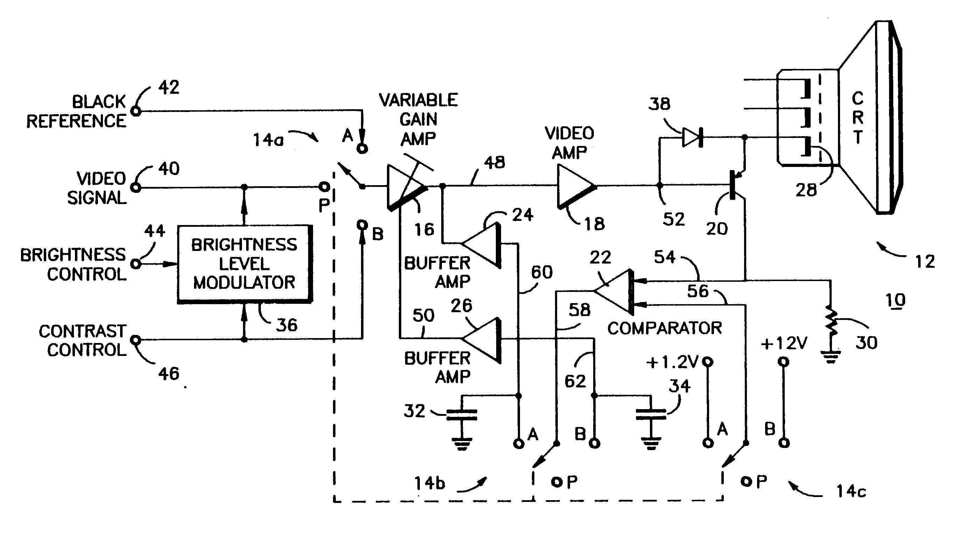

The above mentioned and other features and objects of the invention and the manner of attaining them will become more apparent and the invention itself will be best understood by reference to the following description of an embodiment of the invention taken in conjunction with the accompanying drawing, wherein:

The FIGURE is a simplified schematic representation of one of three video driver circuits for use in a conventional color video display according to the present invention.

### Description of a Preferred Embodiment

Referring now to the FIGURE, a simplified schematic representation of the invention 10 is shown. While the invention 10 is shown only in conjunction with a single cathode of 28 of a conventional cathode ray tube (CRT) 12, similar circuitry would be associated with each individual video signal path. Signals input to black reference input 42, brightness control input 44, contrast control input 46 and hence the output of brightness level modulation 36 would be common to each individual signal path.

As shown, CRT 12 comprises a conventional video display having red, green and blue color guns. A video signal input 40 provides for the input of a respective video signal path to a given cathode 28 of CRT 12 by connection to switch terminal P of time multiplexed switch 14a. An individual video input signal applied to video signal input 40 is, during the time period represented by switch position P, coupled through variable gain amplifier 16 to output line 48. Output line 48 is coupled through video amplifier 18 to video output line 52. Diode 38, which has its anode and cathode respectively connected to the base and emitter of current sampling transistor 20, couples video output line 52 to cathode 28 of CRT 12. The collector lead of current sampling transistor 20 is connected to input line 54 of comparator 22, which is coupled to circuit ground by resistor 30. Reference voltage input line 56 of comparator 22 is connected to the common contact of time multiplexed switch 14c. Time multiplexed switch 14c has a dc setup voltage reference of +1.2 volts at terminal A thereof and a gain setup reference voltage of positive 12 volts at terminal B. Comparator output line 58 of comparator 22 is connected to the common contact of time multiplexed switch 14b. Terminal A of time multiplexed switch 14b is connected to buffer input line 60 of buffer amp 24. Black clamping capacitor 32 couples buffer input line 60 to circuit ground. Buffer input line 62 of buffer amp 26 is connected to terminal B of time multiplexed switch 14b. Gray clamping capacitor 34 couples buffer input line 62 to circuit ground.

The output of buffer amp 24 is connected to output line 48 of variable gain amplifier 16. The output of buffer amp 26 appearing on feedback line 50 is applied to the variable gain terminal of variable gain amplifier 16.

A dc signal is input to black reference input 42 connected to terminal A of time multiplexed switch 14a. A contrast control signal is input to contrast control input 46 for input to terminal B of time multiplexed switch 14a as well as one input of brightness level modulator 36. A brightness control signal is also applied as input to brightness level modulator 36 at brightness control input 44. The output of brightness level modulator 36 is also applied to switch terminal P of time multiplexed switch 14a.

It should be noted that time multiplexed switch 14a, 14b and 14c are switched in sympathy by a control signal derived from the vertical and horizontal scan circuits of the television or data display unit. The control signal in the preferred embodiment is such that for a period of one horizontal scan period following vertical retrace, the time multiplexed switch 14a,14b and 14c are in position "A". And for another horizontal scan period immediately following, in position "B". In the preferred embodiment, these two time periods are arranged to be two consecutive horizontal scans immediately following vertical retrace. These picture lines are at the top of the picture and can be arranged to be off the active CRT 12 screen area. For the rest of the picture time, time multiplexed switch 14a, 14b and 14c are in position "P". In the description of the invention, the letters "A", "B" and "P" will also be used to denote the time periods of time multiplexed switch 14a, 14b and 14c.

During period "A" the operation of the invention 10 is as follows:

A negative feedback loop is set up via video amplifier 18 and buffer amp 24, comparator 22 and current sampling transistor 20. The loop will cause the voltage developed across resistor 30 to adjust to a value substantially equal to the dc setup voltage reference of +1.2 volts applied to comparator 22 in this condition. The comparator 22 output voltage appearing on comparator output line 58, is applied to the input of buffer amp 24 on buffer input line 60 connected to terminal A of time multiplexed switch 14b. This output voltage will be such that buffer amp 24 furnishes the output signal which need be added to that from variable gain amplifier 16 to provide the necessary input signal to video amplifier 18. Since the CRT 12 cathode current corresponds to the nominal black level in this case, it follows that black will be reproduced whenever the ensuing picture signal matches the level applied at terminal A of time multiplexed switch 14a, assuming only that the gain of variable gain amplifier 16 has not changed in the meantime. In a three-channel system, the ratio of resistors 30 will be chosen such that the system reproduces the desired "black" hue. The feedback loops will eliminate variations due to the CRT 12 gain, which may vary and age differently from gun to gun. In general, the blue gun is the most efficient and therefore a higher value resistance for resistor 30 would be utilized while the red gun is usually the least efficient and therefore a lower resistance would be utilized.

During period "B" the operation is as follows:

A negative feedback loop is set up by video amplifier 18 and buffer amp 26, comparator 22, current sampling transistor 20 and variable gain amplifier 16. The loop will cause the voltage developed across resistor 30 to adjust to a value substantially equal to the gain setup reference voltage of +12 volts now applied to comparator 22 on reference voltage input line 56. The output voltage of comparator 22 on comparator output line 58 is applied to the gain control terminal of variable gain amplifier 16 through buffer amp 26. This will cause the gain of variable gain amplifier 16 to be adapted to the input signal applied thereto at terminal B of time multiplexed switch 14a, such that the total signal applied to video amplifier 18 corresponds to the necessary level. It follows that, other things being equal, the gain of variable gain amplifier 16 will be made inversely proportional to the input signal applied to it at terminal B of time multiplexed switch 14a. Thus, in a three-channel system, it will suffice to apply the same variable level pulse to each of the variable gain amplifiers 16 to impose matching variations of gain. The ratio of the gains in the three channels will be automatically adapted to the ratio of the resistors 30 in each channel, since the three comparators 22 share the same positive 12 volt gain setup reference voltage. Since the black level currents are automatically adapted to the ratio of the three resistors 30 also, it follows that correct hue will be maintained at all signal levels and at all gain or contrast control settings.

During period "P" the operation is as follows:

Brightness control is effected by adding a continuous signal from brightness level modulator 36 to the video input signal applied to video signal input 40. Thus, if a continuous positive signal were added to the video signal level which would have corresponded to nominal black, it would become brighter, whereas, if a continuous negative signal were added, it would become less bright. This continuous signal, or pedestal, must be added to all three channels prior to the input of variable gain amplifier 16, and its amplitude must be modulated in the same manner as the amplitude of the gain control insert or contrast control signal applied to contrast control input 46. If not, the brightness would change with contrast. For example, if the contrast is reduced by 6 dB then the brightness control pedestal added during period "P" must likewise be increased by 6 dB. This requirement is satisfied in the preferred embodiment by varying the level of the brightness control pedestal at the output of brightness level modulator 36 in accordance with the applied contrast control signal applied to contrast control input 46. The circuit is designed such that the output of brightness level modulator 36 varies in inverse proporation to the gains of the variable gain amplifiers 16.

In the preferred embodiment, video amplifier 18 is a high voltage amplifier suitable for the drive of cathode 28 of CRT 12, which it does via diode 38 and current sampling transistor 20 in its emitter follower configuration. It is obvious that the electron beam current of CRT 12 appears as the collector current of current sampling transistor 20 which develops a positive voltage with respect to circuit ground across resistor 30. In the preferred embodiment, the voltage across resistor 30 is restricted to about 18 volts which serves to prevent current sampling transistor 20 from saturating.

Comparator 22 compares the voltage developed across resistor 30 with either the dc setup voltage reference of positive 1.2 volts or the gain setup reference voltage of positive 12 volts as selected by time multiplexed switch 14c. The comparator output voltage on comparator output line 58 is transferred to either black clamping capacitor 32 or gray clamping capacitor 34 by time multiplexed switch 14b.

It is appropriate to mention that digital techniques of storing the samples, such as an analog-to-digital and digital-to-analog method. could be used instead of the black and gray clamping capacitors 32 and 34. Also, resistor 30 could be replaced by a capacitor, the peak voltage reached during the sample period being the integrated current of the CRT 12 over the sample period.

It is also apparent that it is possible to sample at rates other than the vertical scan rate of the television or data display unit. That is, it is reasonable to sample the dc condition after one vertical retrace and then sample the gain one picture frame later. That is, to sample at one-half the vertical scan rate. It is also apparent that comparator 22 may be split into two separate comparators individually enabled by commands during time periods "A" and "B".

The means of limiting the voltage on resistor 30 to prevent current sampling transistor 20 from saturating may also be used as a peak beam limiter. By feeding the limiter current back to the contrast control it is possible to obtain a contrast pulldown signal at a predetermined beam limit. This limit will be determined by the limiter voltage and a resistor with series diode to the 12 volts supply such that the resistor does not effect the sampling process but offers a lower value when the voltage on resistor 30 exceeds the 12 volt supply. It is also desired that variable gain amplifier 16 be dc-balanced such that changes in the gain control loop do not require changes in the dc loop.

What has been provided then is an improved video driver circuit and method for automatic gray scale adjustment and elimination of contrast tracking errors which provides for the accurate tracking of gain between red, green and blue video signal paths in a video display as well as the accurate tracking of R-Y and B-Y color difference signals. The apparatus and method of the invention 10 also obviates the burn-in requirement of a CRT 12 saving setup time and power. Further, the invention 10 allows for the elimination of separate drive controls for the separate video signal paths in a color video display. Finally, the invention 10 provides for the modulation of the brightness control signal by the contrast control signal such that picture black level does not change with contrast.

## Claims

1. A video driver circuit for applying a video signal to a video display [12] including a gain controlled amplifier [16] having a variable gain control terminal and having as an input said video signal, and a video amplifier [18] coupled to the output of said gain controlled amplifier [16],
means [20] coupling an output of said video amplifier to an input of said video display for sampling a level of an input signal to said video display and producing a first feedback signal in response to said video signal being a black reference signal and producing a second feedback signal in response to said video signal being a contrast control signal,
a comparator [22] having an output terminal [58] and first [54] and second [56] input terminals, said first input terminal being coupled to an output of said means [20] for alternatively receiving said first and second feedback signals and said second input terminal being correspondingly alternatively connected to a dc setup reference voltage level and a gain setup reference voltage level for producing first and second feedback output signals respectively at said output terminal,
first [24, 32] and second [26, 34] means alternatively coupled to said output terminal of said comparator for storage of said first and second feedback output signals respectively, said first storage means [24, 32] being coupled to an input of said video amplifier and said second storage means [26, 34] being coupled to said variable gain control terminal of said gain controlled amplifier [16], and
a brightness control circuit for the video signal which includes
means for modulating a brightness control signal supplied thereto in accordance with said contrast control signal to produce a brightness control pedestal for application to said video signal, whereby the amplitude of said brightness control pedestal is determined by said brightness and contrast control signals.

2. The video driver circuit of claim 1 wherein said first input terminal of said comparator [22] is alternately switched between said first and second feedback signal sand said second input terminal of said comparator is alternatively switched between said dc and said gain set up reference levels signals, the switching being carried out by means of a time multiplex switch [14C].

3. The video driver circuit of claim 1 characterised by said modulating means comprising a modulator whose output is a signal having an amplitude given by the product of said brightness and contrast control signals.

4. A method for controlling a video signal in a video driver circuit for a video display which circuit has a video signal gain adjustment including sampling a level of the video signal at the video display for providing feedback signals, and including the steps of:
providing a black reference level signal as the video signal and comparing the black reference feedback signal at the video display to an input dc setup reference voltage and locking the black reference signal of the video signal to the dc setup reference voltage;
providing a contrast control signal as the video signal and comparing the contrast control feedback signal at the video display to a variable gain setup reference voltage and locking the contrast control feedback signal to said variable gain set up reference voltage; and
controlling the brightness of the video signal by providing a brightness control signal indicative of a desired dc level of the video signal, and modulating said brightness control signal in accordance with said contrast control signal and producing a brightness control pedestal for application to the video signal, whereby the amplitude of said brightness control pedestal is determined by said brightness and contrast control signals.

5. The method of claim 4 characterised in that said steps of comparing are carried out by means of a comparator whose output is controllably coupled to digital storage means.

## Patentansprüche

1. Videotreiberschaltung zum Anlegen eines Videosignals an eine Videoanzeigeeinrichtung (12), enthaltend einen geregelten Verstärker (16) mit einem Verstärkungsregelungssteueranschluß und dem als Eingang das genannte Videosignal zugeführt wird, und einen Videoverstärker (18), der mit dem Ausgang des geregelten Verstärkers (16) verbunden ist,
eine Einrichtung (20), die einen Ausgang des Videoverstärkers mit einem Eingang der Videoanzeigeeinrichtung verbindet, um einen Pegel eines Eingangssignals an der Videoanzeigeeinrichtung abzutasten und ein erstes Rückkopplungssignal in Abhängigkeit davon zu erzeugen, daß das Videosignal ein Schwarzbezugssignal ist, und ein zweites Rückkopplungssignal in Abhängigkeit davon zu erzeugen, daß das Videosignal ein Kontraststeuersignal ist,
einen Komparator (22) mit einem Ausgangsanschluß (58) und ersten (54) und zweiten (56) Eingangsanschlüssen, wobei der erste Eingangsanschluß mit einem Ausgang der Einrichtung (20) verbunden ist, um alternativ die ersten und zweiten Rückkopplungssignale zu empfangen, und wobei der zweite Eingangsanschluß entsprechend abwechselnd mit einem Bezugs-Einstellgleichspannungspegel und einem Bezugs-Verstärkungseinstellspannungspegel verbunden ist, um erste bzw. zweite Rückkopplungsausgangssignale an dem Ausgangsanschluß zu erzeugen, und
erste (24, 32) und zweite (26, 34) Einrichtungen, die abwechselnd mit dem Ausgangsanschluß des Komparators zur Speicherung der ersten bzw. zweiten Rückkopplungsausgangssignale verbunden sind, wobei die erste Speichereinrichtung (24, 32) mit einem Eingang des Videoverstärkers verbunden ist, und die zweite Speichereinrichtung (26, 34) mit dem Verstärkungssteueranschluß des geregelten Verstärkers (16) verbunden ist, und
eine Helligkeitssteuerschaltung für das Videosignal, die eine Einrichtung zum Modulieren eines ihr zugeführten Helligkeitssteuersignal in Übereinstimmung mit dem Kontraststeuersignal enthält, um einen Helligkeitssteuergrundwert zur Anwendung an dem Videosignal zu erzeugen, wodurch die Amplitude des Helligkeitssteuergrundwertes durch die Helligkeits- und Kontraststeuersignale bestimmt wird.

2. Videotreiberschaltung nach Anspruch 1, bei der der erste Eingangsanschluß des Komparators (22) abwechselnd zwischen den ersten und zweiten Rückkopplungssignalen umgeschaltet wird und der zweite Eingangsanschluß des Komparators abwechselnd zwischen dem Bezugs-Einstellgleichspannungspegelsignal und dem Bezugs-Verstärkungseinstellpegelsignal umgeschaltet wird, wobei das Umschalten mittels eines Zeitmultiplexschalters (14C) ausgeführt wird.

3. Videotreiberschaltung nach Anspruch 1, **dadurch gekennzeichnet**, daß die Modulationseinrichtung einen Modulator enthält, dessen Ausgang ein Signal ist, das eine Amplitude hat, die durch das Produkt aus den Helligkeits- und Kontraststeuersignalen bestimmt ist.

4. Verfahren zum Steuern eines Videosignals in einer Videotreiberschaltung für eine Videoanzeigeeinrichtung, welche Schaltung eine Videosignalverstärkungseinstellung aufweist, umfassend das Abtasten eines Pegels des Videosignals an der Videoanzeigeeinrichtung zur Erzeugung von Rückkopplungssignalen, das die folgenden Schritte enthält:
Erzeugen eines Schwarzbezugspegelsignals als das Videosignal und Vergleichen des Schwarzbezugspegelsignals an der Videoanzeigeeinrichtung mit einer eingegebenen Bezugseinstellgleichspannung und Verriegelung des Schwarzbezugspegelsignals des Videosignals mit der Bezugseinstellgleichspannung;
Erzeugen eines Kontraststeuersignals als das Videosignal und Vergleichen des Kontraststeuerrückkopplungssignals an der Videoanzeigeeinrichtung mit einer variablen Bezugsverstärkungseinstellspannung und Verriegeln des Kontraststeuerrückkopplungssignals mit der variablen Bezugsverstärkungseinstellspannung; und
Steuern der Helligkeit des Videosignals durch Erzeugung eines Helligkeitssteuersignals, das für einen gewünschten Gleichspannungspegel des Videosignals kennzeichnend ist, und Modulieren des Helligkeitssteuersignals in Übereinstimmung mit dem Kontraststeuersignal und Erzeugen eines Helligkeitssteuergrundwertes zur Anwendung am Videosignal, wodurch die Amplitude des Helligkeitssteuergrundwertes durch die Helligkeits- und Kontraststeuersignale bestimmt wird.

5. Verfahren nach Anspruch 4, **dadurch gekennzeichnet**, daß die Schritte des Vergleichs mittels eines Komparators ausgeführt werden, dessen Ausgang steuerbar mit einer digitalen Speichereinrichtung verbunden wird.

## Revendications

1. Circuit de commande vidéo destiné à appliquer un signal vidéo à un dispositif de visualisation vidéo (12) comportant un amplificateur à commande de gain (16) qui possède une borne de commande de gain variable et reçoit en entrée ledit signal vidéo, et un amplificateur vidéo (18) couplé à la sortie dudit amplificateur à commande de gain (16),
un moyen (20) couplant une sortie dudit amplificateur vidéo à une entrée dudit dispositif d'affichage vidéo afin d'échantillonner le niveau d'un signal d'entrée appliqué audit dispositif de visualisation vidéo et de produire un premier signal de réaction en réponse au fait que ledit signal vidéo est un signal de référence de noir ainsi qu'un deuxième signal de réaction en réponse au fait que ledit signal vidéo est un signal de commande de contraste,
un comparateur (22) comportant une borne de sortie (58) et des première et deuxième bornes d'entrée (54 et 56), ladite première borne d'entrée étant couplée à une sortie dudit moyen (20) afin de recevoir, alternativement, lesdits premier et deuxième signaux de réaction, et ladite deuxième borne d'entrée étant, de façon correspondante, alternativement connectée à un niveau de tension de référence de réglage de courant continu et à un niveau de tension de référence de réglage de gain pour produire respectivement des premier et deuxième signaux de sortie de réaction sur ladite borne de sortie,
des premier et deuxième moyens (24, 32 et 26, 34) couplés alternativement à ladite borne de sortie dudit comparateur pour mémoriser respectivement lesdits premier et deuxième signaux de sortie de réaction, ledit premier moyen de mémorisation (24, 32) étant couplé à une entrée dudit amplificateur vidéo, et ledit deuxième moyen de mémorisation (26, 34) étant couplé à ladite borne de commande de gain variable dudit amplificateur à commande de gain (16), et
un circuit de commande de luminosité pour le signal vidéo, qui comporte un moyen servant à moduler un signal de commande de luminosité qui lui est fourni en fonction dudit signal de commande de contraste afin de produire un signal de tension constante, ou palier, de commande de luminosité à appliquer audit signal vidéo, de sorte que l'amplitude dudit signal de tension constante de commande de luminosité est déterminée par lesdits signaux de commande de luminosité et de contraste.

2. Circuit de commande vidéo selon la revendication 1, où ladite première borne d'entrée dudit comparateur (22) est commutée alternativement entre lesdits premier et deuxième signaux de réaction et ladite deuxième borne d'entrée dudit comparateur est commutée alternativement entre lesdits signaux de niveaux de référence de réglage de courant continu et de gain, la commutation étant exécutée au moyen d'un commutateur à multiplexage temporel (14c).

3. Circuit de commande vidéo selon la revendication 1, caractérisé par le fait que ledit moyen de modulation comprend un modulateur dont le signal de sortie est un signal ayant une amplitude donnée par le produit desdits signaux de commande de luminosité et de contraste.

4. Procédé de commande d'un signal vidéo dans un circuit de commande vidéo destiné à un dispositif de visualisation vidéo, lequel circuit présente un réglage de gain du signal vidéo, comportant l'échantillonnage d'un niveau du signal vidéo dans le dispositif de visualisation vidéo de façon à produire des signaux de réaction, et comportant les opérations suivantes:
produire un signal de niveau de référence de noir au titre du signal vidéo, comparer le signal de réaction de référence de noir présent dans le dispositif de visualisation vidéo avec une tension de référence de réglage de courant continu d'entrée, et asservir le signal de référence de noir du signal vidéo sur la tension de référence de réglage de courant continu;
produire un signal de commande de contraste au titre du signal vidéo, comparer le signal de réaction de commande de contraste présent dans le dispositif de visualisation vidéo avec une tension de référence de réglage de gain variable, et asservir le signal de réaction de commande de contraste sur ladite tension de référence de réglage de gain variable ; et
commander la luminosité du signal vidéo en produisant un signal de commande de luminosité indicatif d'un niveau de courant continu voulu du signal vidéo, en modulant ledit signal de commande de luminosité en fonction dudit signal de commande de contraste et en produisant un signal de tension constante, ou palier, de commande de luminosité à appliquer au signal vidéo, de sorte que l'amplitude dudit signal de tension constante de commande de luminosité est déterminée par lesdits signaux de commande de luminosité et de contraste.

5. Procédé selon la revendication 4, caractérisé en ce que lesdites opérations de comparaison sont exécutées au moyen d'un comparateur dont la sortie est couplée de façon pouvant être commandée à un moyen de mémorisation numérique.
